# EUROPEAN PATENT SPECIFICATION

(11) **EP 4 408 180 B1**
(45) Date of publication and mention of the grant of the patent: **06.08.2025**
(21) Application number: 22789238.7
(22) Date of filing: 29.09.2022
(51) Int. Cl.: A23D 7/005, A23L 29/244, A23L 29/256, A23J 3/22, A23J 3/14

(54) **FAT TISSUE MIMETIC**
FETTGEWEBEMIMETIKUM
MIMÉTIQUE DE TISSUS GRAISSEUX

(30) Priority: 30.09.2021 EP 21200147
(43) Date of publication of application: 07.08.2024
(73) Proprietor: Unilever IP Holdings B.V., 3013 AL Rotterdam (NL)
(72) Inventor: BLIJDENSTEIN, Theodorus, Berend, Jan, 6708 WH Wageningen (NL); DONDERS, Joep, Johan, 6708 WH Wageningen (NL); VAN NIEUWENHUIZEN, Sophie, Hoeksma, 6708 WH Wageningen (NL)
(74) Representative: Turner, Felicity Margaret Mary
(86) International application number: PCT/EP2022/077097
(87) International publication number: WO 2023/052492

(56) References cited:
- WO-A1-2021/009043
- WO-A1-2021/110760
- WO-A1-2023/126248
- CN-A- 109 730 272
- US-A1- 2020 170 612
- "Food Stabilisers, Thickeners and Gelling Agents", 6 November 2009, WILEY-BLACKWELL, Oxford, UK, ISBN: 978-1-4051-3267-1, article JEAN-MARC PARRY: "Konjac Glucomannan", pages: 198 - 217, XP055254792, DOI: 10.1002/9781444314724.ch11

## Description

### FIELD OF THE INVENTION

The present invention relates to the provision of fat tissue mimetics for non-animal foodstuffs. In particular, it relates to the provision of fat tissue mimetics that share similar, or the same, characteristics and/or properties as the animal derived fat tissue that they are intended to replace.

### BACKGROUND OF THE INVENTION

Meat is considered the highest quality protein source, not only due to its nutritional characteristics, but also for its appreciated taste. Meat is nutritious because meat protein contains all essential amino acids for humans. In addition, meat comprises essential vitamins, such as vitamin B12, and is rich in minerals. Meat also contains fat tissue which greatly contributes to food acceptability by imparting specific characteristics such as appearance, texture, and mouthfeel. The fat tissue also contributes to the properties of the meat as it is prepared and cooked.

However, from a health point of view, an excessive intake of meat products cannot be recommended, especially because the fat tissue in meat contains cholesterol and a higher proportion of saturated fats.

Further, due to animal diseases such as mad cow disease, a global shortage of animal protein, growing consumer demand for religious (halal or kosher) food, and for economic reasons, there is an increased interest in the consumption of non-meat proteins by consuming meat analogues instead of actual meat products.

Meat analogues are prepared such that they resemble meat as much as possible in appearance, taste and texture. Meat analogues are typically prepared from proteinaceous fibres of non-animal origin. Proteinaceous fibres, such as texturized vegetable protein, are characterized by having an identifiable structure and a structural integrity, such that each unit will withstand hydration, cooking and other procedures used in preparing the fibres for consumption.

The present innovation seeks to help consumers move away from animal based diets to meat analogues. It is widely accepted that such a change in consumption is beneficial in many ways. The meat industry is detrimental to the environment and hugely inefficient compared to the production of crops for plant based diets. Moreover, as mentioned, animal derived fat tissues are known to contain components such as cholesterol and saturated fats which are a significant health risk factor whereas non-animal based food products are healthier, and moreover can be produced far more efficiently and in a sustainable and environmentally acceptable manner.

Although many consumers are motivated to independently move to a plant based diet, other consumers face significant challenges when giving up animal based foodstuffs. A central challenge for providing acceptable non-animal based foodstuffs (also known as meat analogues) is to ensure they mimic as closely as possible the animal based foodstuffs they are replacing. As will be appreciated however, meats are derived from animals and it is not straightforward to provide non-animal alternatives. Meat products are made from the muscle tissue of animals and as such represent a complex interaction between the protein-based part of the tissue (i.e. the connective muscle fibres) and the fat tissue that is found within the musculature (i.e. the intramuscular fat).

The appearance of fat in meat is very important as it cues meat quality, product identify, and provides meat products with the necessary organoleptic properties. Indeed, animal derived fat tissues have specific characteristics and properties. These are perceivable both in the raw and cooked form. Before cooking, animal derived fat tissues have a characteristic visual appearance such as being smooth, white in colour, and opaque. They provide haptic properties such as being cool to the touch, firm, yielding to pressure, returning slowly to their original conformation after pressure has been applied, and are non friable. Animal derived fat tissues are also perceivable in the meat product as an integral part of the tissues, as the marbling of fat in raw products such as steaks or as the white pieces of fat in processed products such as pepperoni. It is also present as veining of fats in cooked products such as the cold cuts of ham that are taken from cooked pork. Moreover, the properties of the fat tissue change during cooking. As animal derived fat tissues are subjected to cooking temperatures the fats they contain melt and are released from the tissue. Animal derived fat tissues also undergo chemical changes, including Maillard reactions, to provide crisping, browning, aromas and distinct flavours.

The objective of this invention is therefore to design a non-animal derived fat tissue mimetic that closely mimics animal derived fat tissues in terms of its characteristics and properties before, during and after cooking. Moreover, the fat tissue mimetic of the present invention must also be suitable for use in the manufacture of meat analogues, for example it must be processable under the same conditions as the other components of meat analogues and must adhere to and/or integrate with those other components during manufacture, storage, transport, cooking, and consumption.

Providing a fat tissue mimetic that closely mimics animal derived fat tissues is particularly challenging because animal fat tissue is an extremely complex, organically grown tissue, that is structured from closely packed fat particles which are embedded in connective tissue in a fibrillar network of proteins. It is this complex structure that delivers the properties that consumers expect from meat-based foodstuffs and it something that is very difficult to reproduce in non-animal based products.

The prior art records several attempts to deliver replacements to animal derived fat tissues. However, these disclosures are not directed to the object of the present invention. Instead, they are intended to reduce fat levels in meat based products by providing a gelled system that can then be incorporated back into animal meats to deliver a lower animal fat final product. Such disclosures include the following patent applications: US4427704 discloses edible materials containing a thickened or gelled phase comprising a mixture or a reaction product of at least one carrageenan and at least one glucomannan, wherein the gelled phase may be either a thermo-irreversible gel or a thermo-reversible gel and the pH of the edible material is below 8; CN112655896 discloses carrageenan and konjac glucomannan composite gum for meat products and a preparation process thereof; US5358731 discloses a process for producing processed minced meat foods comprising adding from 0.01 to 0.04 parts by weight of an alkaline substance to an aqueous sol containing at least 1 part by weight of konjak mannan, 0.2 to 10 parts by weight of other gel-forming materials and 15 to 50 parts by weight of water, mixing the resulting swollen gel with minced meat and, optionally other food ingredients, and then freezing the resulting mixture; KR20160116551 relates to a method for making a fat substitute containing methylcellulose and a low-fat hamburger patty using the same and, more specifically, to a method for making a fat substitute containing methylcellulose, wherein a fat substitute composition prepared by mixing methylcellulose, carrageenan, and glucomannan is mixed with purified water at a predetermined ratio, thereby preparing a fat substitute, and to a low-fat hamburger patty using the same; KR20170066291 also relates to a method to manufacture a fat substitution containing methyl cellulose and a low-fat hamburger patty using the same; CN 107259442 discloses a compounded gel used as fat substitute and a processing method comprising the steps of material choosing, cutting, preserving, sausage filling, and baking or air-drying, wherein chosen materials comprise a main material, an auxiliary material and an additive, and the main material comprises 8-10 parts by weight of pork and 0.9-2.5 parts by weight of the compounded gel; and CN109619440 discloses a compound sausage water-retaining agent. EP 2 951 236 relates to a combination of cellulose ether and natural gums useful as sausage additive, more specifically as a binder for sausage-type meat products. The disclosure provides examples of sausages comprising both carrageenan and konjac gum which are present in a weight ratio of 1:1.

As stated, all the foregoing disclosures are directed to providing compositions to replace fat in meat based products. They are not intended to provide a fat tissue mimetic that replaces the animal based fat tissue but that still provides healthier fat and that retains the characteristics of said animal based fat tissue and, moreover, the compositions disclosed are not intended for and/or are not suitable for use in meat analogues. Additionally, they do not contain the features of the invention - in particular they do not disclose the presence of low melting point fats and/or do not disclose the specific gelling system as claimed herein below. For the avoidance of doubt, the present invention is not directed to removing fat from the final products. Rather, the present invention recognises that fat is an important constituent of the final products and is required during cooking and consumption to deliver the required characteristics and properties that are expected by consumers. It is an object of the present invention to provide an improved fat tissue mimetic that contains a fat that is healthier yet that also delivers the characteristics and properties of animal based fat tissue.

In contrast to the foregoing prior art, certain applications are directed towards providing meat substitute compositions such as WO13010042 which discloses embodiments in which the meat substitute product contains no methylcellulose, no carrageenan, no caramel color, no konjac flour, no gum arabic, and no acacia gum. WO2021110760 relates to a dry composition to produce a plant-based food product. The composition comprises a mixture of ingredients including carrageenan, cellulose ether glucomannan, at least one plant based protein, starch and potassium chloride. In an alleged embodiment of the invention, carrageenan and konjac gum are said to be present in a weight ratio of 3:2 and 9:1 carrageenan and konjac to potassium chloride. However the weight ratio of carrageenan to konjac is not disclosed. Although the foregoing are alleged to provided meat substitute compositions, they do not however provide fat tissue mimetics as defined herein.

CN101558890 is alleged to disclose a simulated fat. The base material for preparing the simulated fat comprises konjaku flour and carrageenin of which the compound weight ratio is 1:0.3-0.45. However, as demonstrated below, such a material does not provide an acceptable fat tissue mimetic.

CN109730272 finally discloses a fat mimetic product with konjac and carrageenan, in a ratio of carrageenan to konjac of 1:1, 6:4 or 7:3, the konjac being treated with alkaline products to be deacetylated.

The inventors have surprisingly found through extensive research that a high quality fat tissue mimetic can be produced if a particular gelling system comprising specific components in a defined weight ratio is employed, and if that gelling system is used in combination with a specific fat. In this way, the present invention makes it possible to deliver a fat tissue mimetic that is both easily processed and that has the required characteristics and properties before, during and after cooking as set out below.

### SUMMARY OF THE INVENTION

In a first aspect, the present invention therefore provides a fat tissue mimetic comprising
- 2-70wt% of fat;
- 1-20wt% of protein; and
- 0.5-10wt% of a gelling system comprising carrageenan and konjac,
characterised in that the weight ratio of carrageenan : konjac is greater than 1:1 and in that the melting point of the fat is from -30°C to 35°C.

Preferably the fat tissue mimetic comprises from 4 to 60 wt% fat.

Preferably the melting point of the fat is from -27.5°C to 15°C.

Preferably the fat is linseed oil, castor oil, sunflower oil, soybean oil, rapeseed oil, olive oil, or a mixture thereof.

Preferably the fat tissue mimetic comprises from 1.25 to 17.5 wt% protein.

Preferably the protein is soy protein, cereal protein, rapeseed protein, cottonseed protein, sunflower protein, sesame protein, lupin protein, potato protein and algae protein. Preferred plant proteins are soy protein, wheat protein, oat protein, bran protein or a combination thereof.

Preferably the weight ratio of carrageenan : konjac is from 1.15:1 to 10:1.

Preferably the fat tissue mimetic comprises from 1 to 9 wt% of the gelling system.

Preferably the weight ratio of the sum of carrageenan and konjac : protein is from 0.5:1 to 1.5:1.

Preferably the weight ratio of the sum of carrageenan and konjac : fat is from 0.05:1 to 0.5:1.

In a second aspect, the present invention provides a process for the production of the fat mimetic of the first aspect comprising the steps of:
(a) hydrating the protein;
(b) combining the hydrated protein with the components of the gelling system;
(c) combining the mixture from step (b) with the fat; and then
(d) combining the mixture from step (c) with the remaining ingredients.

Preferably steps (b), (c) and/or (d) are carried out under negative pressure.

Preferably steps (b), (c) and/or (d) are carried out at a pressure of less than -11 PSI.

In a third aspect, the present invention provides a meat analogue comprising the fat tissue mimetic of the first aspect.

Preferably the meat analogue is a bacon meat analogue or a pepperoni meat analogue.

### DETAILED DESCRIPTION OF THE INVENTION

### FAT TISSUE MIMETIC

The invention provides a fat tissue mimetic. The term "fat tissue mimetic" means a composition capable of and suitable for replacing animal derived fat tissues in the context of meat analogue compositions. The term "meat analogue" as used herein refers to hydrated proteinaceous food products that comprise non-meat protein as protein source, and are similar, at least in part, to real meat in appearance, colour, flavour and texture.

As defined herein, a fat tissue mimetic does not merely replace animal fat per se, what the fat tissue mimetic of the present invention surprisingly achieves is that it provides a relatively simple formulation which is easy to process but that nevertheless provides a structure within which healthy, unsaturated (PUFA, MUFA), low melting point fats may be provided and moreover said fat tissue mimetic is capable of providing the same or similar characteristics and/or properties as the animal derived fat tissue that they are intended to replace in a meat analogue.

### FAT

The fat tissue mimetic comprises from 2 to 70wt% of fat, preferably from 4 to 60 wt%, more preferably from 6 to 55 wt%, more preferably still from 8 to 50 wt%, yet more preferably from 10 to 45 wt%, yet more preferably still from 12 to 40 wt%, even more preferably from 14 to 35 wt%, even more preferably still from 16 to 30 wt%, most preferably the fat tissue mimetic comprises from 18 to 25 wt% of fat.

Preferably the fat tissue mimetic comprises at least 4 wt% of fat, more preferably at least 6 wt%, more preferably still at least 8 wt%, yet more preferably at least 10 wt%, yet more preferably still at least 12 wt%, even more preferably at least 14 wt%, even more preferably still at least 16 wt%, most preferably the fat tissue mimetic comprises at least 18 wt% of fat.

Preferably the fat tissue mimetic comprises most 60 wt% of fat, more preferably at most 55 wt%, more preferably still at most 50 wt%, yet more preferably at most 45 wt%, yet more preferably still at most 40 wt%, even more preferably at most 35 wt%, even more preferably still at most 30 wt%, most preferably the fat tissue mimetic comprises at most 25 wt% of fat.

The term "fat" as used herein refers to glycerides selected from triglycerides, diglycerides, monoglycerides, phosphoglycerides and combinations thereof. The term "fat" encompasses fats that are liquid at ambient temperature as well as fats that are solid or semi-solid at ambient temperature. The melting point of a fat can be determined according to ISO 6321 (2021).

It is an object of this present invention to provide a fat mimetic that comprises healthy fats. By healthy fats is meant fats with a higher ratio of polyunsaturated and monounsaturated fatty acids relative to saturated fatty acids. Such healthy fats differ from the fats in animal derived fat tissues because these healthy fats have lower melting points than fats with high saturated fatty acid content and are typically liquid at ambient temperatures - i.e. oils. To combine such oils into a fat tissue mimetic is not straightforward, however, the present invention allows this to be achieved.

### MELTING POINT OF FAT

Therefore, the melting point of the fat is from -30°C to 35°C, preferably from -27.5°C to 15°C, more preferably from -25°C to 0°C, more preferably still from -22.5°C to -5°C, yet more preferably from -20°C to -10°C, most preferably the melting point of the fat is from -18°C to -15°C.

The melting point of the fat is at least -30°C, preferably at least -27.5°C, more preferably at least -25°C, more preferably still at least -22.5°C, yet more preferably at least -20°C, most preferably the melting point of the fat is at least -18°C.

The melting point of the fat is at most 35°C, preferably at most 15°C, more preferably at most 0°C, more preferably still at most -5°C, yet more preferably at most -10°C, most preferably the melting point of the fat is at most -15°C.

### FAT TYPES

The fat may be selected from linseed oil, castor oil, sunflower oil, soybean oil, rapeseed oil, olive oil, tung oil, cotton seed oil, peanut oil, palm kernel oil, coconut oil, cocoa butter, and palm oil. The fat may also be a mixture thereof.

Preferably the fat is linseed oil, castor oil, sunflower oil, soybean oil, rapeseed oil, olive oil, tung oil, cotton seed oil, peanut oil or a mixture thereof.

More preferably the fat is linseed oil, castor oil, sunflower oil, soybean oil, rapeseed oil, olive oil, or a mixture thereof.

Most preferably the fat is sunflower oil.

### PROTEIN

The fat tissue mimetic comprises from 1 to 20wt% of protein, preferably from 1.25 to 17.5 wt%, more preferably from 1.5 to 15 wt%, more preferably still from 2 to 12.5 wt%, yet more preferably from 2.5 to 7.5 wt%, most preferably the fat tissue mimetic comprises from 3 to 5 wt% of protein.

The fat tissue mimetic comprises at least 1 wt% of protein, preferably at least 1.25 wt%, more preferably at least 1.5 wt%, more preferably still at least 2 wt%, yet more preferably at least 2.5 wt%, most preferably the fat tissue mimetic comprises at least 3 wt% of protein.

The fat tissue mimetic comprises at most 20wt% of protein, preferably at most 17.5 wt%, more preferably at most 15 wt%, more preferably still at most 12.5. wt%, yet more preferably at most 7.5 wt%, most preferably the fat tissue mimetic comprises at most 5 wt% of protein.

### PROTEIN - TYPES

The protein is preferably selected from dairy protein, egg protein, plant protein, fungal protein or combinations thereof.

Examples of dairy protein are casein, whey protein and combinations thereof.

Examples of egg protein are proteins that are present in a chicken egg, such as egg yolk protein of egg white protein. Preferably the egg protein is egg white protein.

Examples of fungal protein are mushroom proteins or the proteins obtained from the fungi *Fusarium.* Preferably, the fungal protein is obtained from the fungi *Fusarium,* more preferably the fungal protein is obtained from the fungal species *Fusarium venenatum.* These *Fusarium venenatum* proteins are typically applied in Quorn^{®} products.

Preferably the proteins are plant proteins. The plant proteins may be soy protein, cereal protein, rapeseed protein, cottonseed protein, sunflower protein, sesame protein, lupin protein, potato protein and algae protein. Preferred plant proteins are soy protein, wheat protein, oat protein, bran protein and combinations thereof. More preferred plant proteins are soy protein, wheat protein and combinations thereof. Most preferably, the protein is soy protein.

### GELLING SYSTEM

The fat tissue mimetic comprises a gelling system. The term "gelling system" as used herein refers to a composition that is capable of forming a gel at ambient temperature and ambient pressure. The term "gel" as used herein refers to a solid or semi-solid aqueous composition that is largely composed of an aqueous liquid that is rendered nonliquid by the presence of a three-dimensional network structure within said liquid. A gel typically has a ratio of elastic modulus G' to viscous modulus G" of at least 1, preferably at least 3, more preferably at least 5. G' and G" are measured under the following circumstances: the composition is kept for at least 12 hours at 20 °C. G' and G" are measured at 20 °C, using an oscillatory frequency of 1 rad/s and at a strain of 1% (tested to be within the linear viscoelastic regime). This set of parameters refers to a standard oscillatory test, also known as a dynamic mechanical analysis, conducted with a standard state of the art low deformation rheometer as commercially available from e.g. Bohlin, Anton Paar or TA Instruments. See also chapter 8.5 of 'The Rheology Handbook' by T.G. Mezger (2006).

Despite the vast array of possible thickeners, binders, and gelling agents available to the person skilled in the art, the present invention utilises a specific gelling system that comprises carrageenan and konjac. By "carrageenan" is meant the natural linear sulfated polysaccharides that are extracted from red edible seaweeds that are widely used in the food industry, for their gelling, thickening, and stabilizing properties. Their main application is in dairy and meat products, due to their strong binding to food proteins. Carrageenans are anionic polysaccharides containing 15-40% ester-sulfate and are categorized into three different classes based on their sulfate content: Kappa-carrageenan has one sulfate group per disaccharide; iota-carrageenan has two; and lambda-carrageenan has three. By "konjac" is meant konjac mannan, a water-soluble hydrocolloid obtained from the flour of the *A. konjac* plant (i.e. the unpurified raw product from the root of the perennial plant *Amorphophallus konjac*), the main component of which is a high molecular weight polysaccharide glucomannan consisting of d-mannose and d-glucose units at a molar ratio of 1.6:1.0, connected by β(1-4)-glycosidic bonds. The CAS registry number 37220-17-0 and the EINECS No 253-404-6 correspond to konjac mannan, a term that covers for both konjac gum and konjac glucomannan. Konjac gum (E 425 i) and konjac glucomannan (E 425 ii) are distinguished in the definition regarding the main components (≥ 75% carbohydrate vs ≥ 95% total dietary fibre on a dry weight basis) and in molecular weight. The glucomannan from konjac gum and from konjac glucomannan is composed of linear chains of (1→4)-linked mannopyranose and glucopyranose units with varying amounts of acetyl groups. Preferably the konjac is konjac gum.

### GELLING SYSTEM - CARRAGEENAN : KONJAC RATIOS

Not only does the present invention specifically utilise a gelling system comprising carrageenan and konjac, the inventors have also found that the relative amounts of these components of the gelling system must also be carefully controlled in order to deliver a composition that is suitable for use as a fat mimetic, especially when the fat in the fat mimetic has a low melting point. Specifically, the amount of carrageenan should be higher than the relative amount of konjac.

The weight ratio of carrageenan : konjac in the fat tissue mimetic is therefore greater than 1:1. Preferably the weight ratio of carrageenan : konjac is from 1.15:1 to 10:1, more preferably from 1.25:1 to 7:1, more preferably still from 1.5:1 to 6:1, yet more preferably from 2:1 to 5:1, yet more preferably still from 2:1 to 4:1, even more preferably from 2:1 to 3:1, most preferably about 2:1.

Preferably the weight ratio of carrageenan : konjac is at least 1.15:1, more preferably at least 1.25:1, more preferably still at least 1.5:1, most preferably at least 2:1.

Preferably the weight ratio of carrageenan : konjac is at most 10:1, more preferably at most 7:1, more preferably still at most 6:1, yet more preferably at most 5:1, yet more preferably still at most 4:1, most preferably at most 3:1.

### GELLING SYSTEM - TOTAL AMOUNT

The fat tissue mimetic comprises from 0.5 to 10 wt% of the gelling system. That is to say the additive amounts of carrageenan and konjac amount to from 0.5 to 10 % of the weight of the fat tissue mimetic.

Preferably the fat mimetic comprises from 1 to 9 wt% of the gelling system, more preferably from 1.5 to 8 wt%, more preferably still from 2 to 6 wt%, most preferably from 2.5 to 4 wt%.

Preferably the fat mimetic comprises at least 1 wt% of the gelling system, more preferably at least 1.5 wt%, more preferably still at least 2 wt%, most preferably at least 2.5 wt%.

Preferably the fat mimetic comprises at most 9 wt% of the gelling system, more preferably at most 8 wt%, more preferably still at most 6 wt%, most preferably at most 4 wt%.

### CARRAGEENAN

Preferably the fat mimetic comprises from 0.25 to 9 wt% carrageenan, more preferably from 0.5 to 8 wt%, more preferably still from 0.75 to 7 wt%, yet more preferably from 1 to 6 wt%, yet more preferably still from 1.5 to 5 wt%, even more preferably from 1.75 to 3 wt%, most preferably the fat mimetic comprises about 2 wt% carrageenan.

Preferably the fat mimetic comprises at least 0.25 wt% carrageenan, more preferably at least 0.5 wt%, more preferably still at least 0.75 wt%, yet more preferably at least 1 wt%, yet more preferably still at least 1.5 wt%, most preferably at least 1.75 wt%.

Preferably the fat mimetic comprises at most 9 wt% carrageenan, more preferably at most 8 wt%, more preferably still at most 7 wt%, yet more preferably at most 6 wt%, yet more preferably still at most 5 wt%, most preferably at most 3 wt%.

### KONJAC

Preferably the fat mimetic comprises from 0.05 to 5 wt% konjac, more preferably from 0.075 to 4 wt%, more preferably still from 0.1 to 3 wt%, yet more preferably from 0.25 to 2 wt%, yet more preferably still from 0.5 to 1.5 wt%, even more preferably from 0.75 to 1.25 wt%, most preferably the fat mimetic comprises about 1 wt% konjac.

Preferably the fat mimetic comprises at least 0.05 wt% konjac, more preferably at least 0.075 wt%, more preferably still at least 0.1 wt%, yet more preferably at least 0.25 wt%, yet more preferably still at least 0.5 wt%, most preferably at least 0.75 wt%.

Preferably the fat mimetic comprises at most 5 wt% konjac,more preferably at most 4 wt%, more preferably still at most 3 wt%, yet more preferably at most 2 wt%, yet more preferably still at most 1.5 wt%, most preferably at most 1.25 wt%.

### GELLING SYSTEM - ADDITIONAL COMPONENTS

The gelling system of the fat tissue mimetic may also comprise a cellulose based gelling agent. Preferably the cellulose based gelling agent is methyl cellulose. The gelling system of the fat tissue mimetic preferably comprises from 0.1 to 5 wt% methyl cellulose, more preferably from 0.2 to 4 wt%, more preferably still from 0.5 to 3 wt%, yet more preferably from 1 to 2 wt%, most preferably about 1.7 wt%.

The gelling system of the fat tissue mimetic preferably comprises at least 0.1 wt% methyl cellulose, more preferably at least 0.2 wt%, more preferably still at least 0.5 wt%, most preferably at least 1 wt%.

The gelling system of the fat tissue mimetic preferably comprises at most 5 wt% methyl cellulose, more preferably at most 4 wt%, more preferably still at most 3 wt%, most preferably at most 2 wt%.

### BINDER SYSTEM

The fat tissue mimetic may also comprise a binder system. The fat tissue mimetic preferably comprises from 2 to 20 wt% of a binder system, more preferably from 3 to 15 wt%, more preferably still from 4 to 10 wt%, yet more preferably from 5 to 7 wt%, most preferably about 6 wt%.

The fat tissue mimetic preferably comprises at least 2 wt% of a binder system, more preferably at least 3 wt%, more preferably still at least 4 wt%, most preferably at least 5 wt%.

The fat tissue mimetic preferably comprises at most 20 wt% of a binder system, more preferably at most 15 wt%, more preferably still at most 10 wt%, most preferably at most 7 wt%.

### BINDER SYSTEM COMPONENTS

The fat tissue mimetic may comprise starch-based binder as a component of the binder system. Preferably the starch-based binder is a plant-based starch, more preferably the plant-based starch is potato starch. The fat tissue mimetic preferably comprises from 0.1 to 5 wt% potato starch, more preferably from 0.2 to 4 wt%, more preferably still from 0.5 to 3 wt%, yet more preferably from 1 to 2 wt%, most preferably about 1.5 wt%.

The fat tissue mimetic preferably comprises at least 0.1 wt% potato starch, more preferably at least 0.2 wt%, more preferably still at least 0.5 wt%, most preferably at least 1 wt%.

The fat tissue mimetic preferably comprises at most 5 wt% potato starch, more preferably at most 4 wt%, more preferably still at most 3 wt%, most preferably at most 2 wt%.

The fat tissue mimetic may also comprise fibre-based binder as a component of the binder system. Preferably the fibre-based binder is an oat-based fibre, most preferably the fibre-based binder is oat fibre. The fat tissue mimetic preferably comprises from 1 to 10 wt% oat fibre, more preferably from 2 to 8 wt%, more preferably still from 2.5 to 6 wt%, yet more preferably from 3 to 4 wt%, most preferably about 3.5 wt%.

The fat tissue mimetic preferably comprises at least 1 wt% oat fibre, more preferably at least 2 wt%, more preferably still at least 2.5 wt%, most preferably at least 3 wt%.

The fat tissue mimetic preferably comprises at most 10 wt% oat fibre, more preferably at most 8 wt%, more preferably still at most 6 wt%, most preferably at most 4 wt%.

### GELLING SYSTEM AND BINDER SYSTEM

Preferably the fat tissue mimetic comprises a total combined amount of gelling system and binder system (i.e. the total wt% of carrageenan and konjac in addition to any additional components of the gelling system if present and in addition to any additional components of a binding system if present) of from 0.5 to 30 wt%, more preferably from 1 to 25 wt%, more preferably still from 2.5 to 20 wt%, yet more preferably from 5 to 15 wt%, yet more preferably still from 7.5 to 12.5 wt%, most preferably from 9 to 10 wt%.

Preferably the fat tissue mimetic comprises a total combined amount of gelling system and binder system of at least 0.5 wt%, more preferably at least 1 wt%, more preferably still at least 2.5 wt%, yet more preferably at least 5 wt%, yet more preferably still at least 7.5 wt%, most preferably at least 9 wt%.

Preferably the fat tissue mimetic comprises a total combined amount of gelling system and binder system of at most 30 wt%, more preferably at most 25 wt%, more preferably still at most 20 wt%, yet more preferably at most 15 wt%, yet more preferably still at most 12.5 wt%, most preferably at most 10 wt%.

### FLAVOURS / SALTS / PRESERVATIVES

It has been found that the fat tissue mimetic has good taste and therefore flavours are not necessarily required. Nevertheless, dependant on the application of the fat tissue (i.e. the meat analogue that will comprise the fat tissue mimetic), the fat tissue mimetic may also comprise flavour components. The fat tissue mimetic therefore preferably comprises from 1 to 5 wt% of a flavour or flavours, more preferably from 1.5 to 4 wt%, more preferably still from 2 to 3 wt%, most preferably about 2.5 wt%.

The fat tissue mimetic preferably comprises at least 1 wt% of a flavour or flavours, more preferably at least 1.5 wt%, most preferably at least 2 wt%.

The fat tissue mimetic preferably comprises at most 5 wt% of a flavour or flavours, more preferably at most 4 wt%, most preferably at most 3 wt%.

The fat tissue mimetic may also comprise salt or salts. The fat tissue mimetic preferably comprises from 0.5 to 5 wt% salt, more preferably from 1 to 4 wt%, more preferably still from 1.5 to 3 wt%, most preferably about 2 wt%.

The fat tissue mimetic preferably comprises at least 0.5 wt% salt, more preferably at least 1 wt%, most preferably at least 1.5 wt%.

The fat tissue mimetic preferably comprises at most 5 wt% salt, more preferably at most 4 wt%, most preferably at most 3 wt%.

It has been found that the fat tissue is remarkably stable, therefore only low levels of a preservative system are required. Moreover, any preservative system can be very simple. The fat tissue mimetic may therefore also comprise a preservative system, preferably the preservative system comprises or consists of only citric-acid and/or lactic acid. The fat tissue mimetic preferably comprises from 0.5 to 5 wt% of said preservatives, more preferably from 1 to 4 wt%, more preferably still from 1.5 to 3 wt%, most preferably about 2 wt%.

The fat tissue mimetic preferably comprises at least 0.5 wt% of preservatives, more preferably at least 1 wt%, most preferably at least 1.5 wt%.

The fat tissue mimetic preferably comprises at most 5 wt% of preservatives, more preferably at most 4 wt%, most preferably at most 3 wt%.

### WEIGHT RATIOS RELATIVE TO CARRAGEENAN

The preferred weight ratios of carrageenan relative to other components of the fat tissue mimetic are as follows.

Preferably the weight ratio of carrageenan : methylcellulose is from 0.1:1 to 1.6:1, more preferably from 1.18:1 to 1.47:1.

Preferably the weight ratio of carrageenan : fibre is from 0.5:1 to 0.8:1, more preferably from 0.57:1 to 0.71:1.

Preferably the weight ratio of carrageenan : oat fibre is from 0.5:1 to 0.8:1, more preferably from 0.57:1 to 0.71:1.

Preferably the weight ratio of carrageenan : starch is from 1.3:1 to 2.3:1, more preferably from 1.6:1 to 2:1.

Preferably the weight ratio of carrageenan : potato starch is from 1.3:1 to 2.3:1, more preferably from 1.6:1 to 2:1.

Preferably the weight ratio of carrageenan : protein is from 0.46:1 to 0.74:1, more preferably from 0.5:1 to 0.63:1.

Preferably the weight ratio of carrageenan : soy protein is from 0.46:1 to 0.74:1, more preferably from 0.5:1 to 0.63:1.

Preferably the weight ratio of carrageenan : fat is from 0.1:1 to 0.19:1, more preferably from 0.12:1 to 0.15:1.

Preferably the weight ratio of carrageenan : sunflower oil is from 0.1:1 to 0.19:1, more preferably from 0.12:1 to 0.15:1.

### WEIGHT RATIOS RELATIVE TO KONJAC

The preferred weight ratios of konjac relative to other components of the fat tissue mimetic are as follows.

Preferably the weight ratio of konjac : methylcellulose is from 0.05:1 to 0.75:1, more preferably from 0.29:1 to 0.59:1.

Preferably the weight ratio of konjac : fibre is from 0.05:1 - 0.4:1, more preferably, from 0.14:1 to 0.29:1.

Preferably the weight ratio of konjac : oat fibre is from 0.05:1 - 0.4:1, more preferably, from 0.14:1 to 0.29:1.

Preferably the weight ratio of konjac : starch is from 0.05:1 to 1.1:1, more preferably, from 0.4:1 to 0.8:1.

Preferably the weight ratio of konjac : potato starch is from 0.05:1 to 1.1:1, more preferably, from 0.4:1 to 0.8:1.

Preferably the weight ratio of konjac : protein is from 0.05:1 to 0.35:1, more preferably from 0.13:1 to 0.25:1.

Preferably the weight ratio of konjac : soy protein is from 0.05:1 to 0.35:1, more preferably from 0.13:1 to 0.25:1.

Preferably the weight ratio of konjac : fat is from 0.01:1 to 0.08:1, more preferably from 0.03:1 to 0.06:1.

Preferably the weight ratio of konjac : sunflower oil is from 0.01:1 to 0.08:1, more preferably from 0.03:1 to 0.06:1.

### WEIGHT RATIOS RELATIVE TO THE SUM OF CARRAGEENAN AND KONJAC

The preferred weight ratios of the sum of the carrageenan and konjac relative to other components of the fat tissue mimetic are as follows.

Preferably the weight ratio of the sum of carrageenan and konjac : protein is from 0.5:1 to 1.5:1, more preferably about 0.75:1.

Preferably the weight ratio of the sum of carrageenan and konjac : soy protein is from 0.5:1 to 1.5:1, more preferably about 0.75:1.

Preferably the weight ratio of the sum of carrageenan and konjac : fat is from 0.05:1 to 0.5:1, more preferably about 0.18:1.

Preferably the weight ratio of the sum of carrageenan and konjac : sunflower oil is from 0.05:1 to 0.5:1, more preferably about 0.18:1.

### WEIGHT RATIOS RELATIVE TO THE SUM OF THE GELLING SYSTEM AND ANY BINDER SYSTEM

The preferred weight ratios of the total combined amount of the gelling system and any binder system (i.e. the total wt% of carrageenan and konjac in addition to any additional components of the gelling system and binder system if present) are as follows.

Preferably the weight ratio of the total combined amount of gelling system and binder system : fat is from 0.1:1 to 1:1, more preferably about 0.56:1.

Preferably the weight ratio of the total combined amount of gelling system and binder system : sunflower oil is from 0.1:1 to 1:1, more preferably about 0.56:1.

Preferably the weight ratio of the total combined amount of gelling system and binder system : protein is from 1:1 to 5:1, more preferably about 2.36:1.

Preferably the weight ratio of the total combined amount of gelling system and binder system : soy protein is from 1:1 to 5:1, more preferably about 2.36:1.

### PROCESS FOR THE PRODUCTION OF THE FAT TISSUE MIMETIC

The fat tissue mimetic has been found to be remarkably simple to prepare. In a second aspect of the invention, the fat tissue mimetic of the first aspect is prepared as follows.

The protein is hydrated with water, preferably chilled water, more preferably the water is less than 4°C. Preferably the protein is hydrated with water for from 1 to 25 minutes, more preferably from 5 to 15 minutes, most preferably about 10 minutes. Alternatively, approximately half the water may be in the form of ice.

The hydrated protein is combined with the components of the gelling system, and the components of the binder system if used. It has been found that if this combination step is carried out under negative pressure, then the final product is of a higher quality and has a more optimal viscosity for production. Therefore, this combination step is preferably carried out at about -0.8 bar (about -11 PSI). Preferably this combination step is carried out for about 3 minutes.

Any vacuum is released, and then the fat is added and combined with the ingredients present. Again, it has been found that if this combination step is carried out under negative pressure, then the final product is of a higher quality and has a more optimal viscosity for production. Therefore, this combination step is preferably carried out at about -0.8 bar (about -11 PSI). Preferably this combination step is carried out for about 2 minutes.

Any flavourings, salts, and/or preservatives are then added and mixed, preferably out at about -0.8 bar (about -11 PSI) and/or preferably for about 2 minutes.

In this way, a high quality fat tissue mimetic is produced.

### MEAT ANALOGUES COMPRISING THE FAT TISSUE MIMETIC

The fat tissue mimetic may then be combined in a meat analogue product to deliver realistic and consumer acceptable performance that is akin to animal derived fat tissues. The fat tissue mimetic may be layered with other proteinaceous components to create bacon-like meat analogues. It has been found that the fat tissue mimetic of the present invention is particularly suitable for co-extrusion with the proteinaceous components, thus providing a product that is not only very similar to the meat based product, but is also easy to process on an industrial scale.

Preferably the meat analogue comprises from 10 to 90 wt% of the fat tissue mimetic more preferably from 20 to 80 wt%, more preferably still from 30 to 70 wt%, yet more preferably from 40 to 60 wt%, yet more preferably still from 45 to 55 wt%, most preferably about 50 wt%.

Preferably the meat analogue comprises at least 10 wt% of the fat tissue mimetic, more preferably at least 20 wt%, more preferably still at least 30 wt, yet more preferably at least 40 wt%, most preferably at least 45 wt%.

Preferably the meat analogue comprises at most 90 wt% of the fat tissue mimetic, more preferably at most 80 wt%, more preferably still at most 70 wt%, yet more preferably at most 60 wt%, most preferably at most 55 wt%.

The fat tissue mimetic may also be chopped into smaller pieces and combined with other proteinaceous components to create sausage-like meat analogues. It has been found that the fat tissue mimetic of the present invention is particularly suitable for the creation of small "fat-like" pieces that, when combined with proteinaceous components and extruded through a casing apparatus (such as a sausage-making machine), create distinct visual cues to the consumer and hence provided a product that is very similar to the meat based product.

The fat tissue mimetic of the invention is particularly suitable for pepperoni type products. It may also be used to create meat analogues of cold-cuts such as sliced ham or sliced beef which are characterised by the veining of fats within the muscle structure.

In view of the carefully controlled and designed composition of the fat tissue mimetic, the cooking behaviour of the fat tissue mimetic is also comparable to animal based fat tissues.

Preferably the meat analogue is a bacon and/or pepperoni meat analogue.

As used herein the term "comprising" encompasses the terms "consisting essentially of" and "consisting of". Where the term "comprising" is used, the listed steps or options need not be exhaustive.

Unless otherwise specified, numerical ranges expressed in the format "from x to y" are understood to include x and y. In specifying any range of values or amounts, any particular upper value or amount can be associated with any particular lower value or amount.

Except in the examples and comparative experiments, or where otherwise explicitly indicated, all numbers are to be understood as modified by the word "about".

All percentages and ratios contained herein are calculated by weight unless otherwise indicated.

As used herein, the indefinite article "a" or "an" and its corresponding definite article "the" means at least one, or one or more, unless specified otherwise.

The various features of the present invention referred to in individual sections above apply, as appropriate, to other sections *mutatis mutandis.* Consequently, features specified in one section may be combined with features specified in other sections as appropriate. Any section headings are added for convenience only and are not intended to limit the disclosure in any way.

The examples are intended to illustrate the invention and are not intended to limit the invention to those examples *per se.*

### EXAMPLES

### FORMULATIONS

The table below shows the formulations tested. Formulations A-F were comparative examples, formulations 1-3 were according to the invention. The weight ratios between key components are also shown in Table 1. Abbreviations used in Table 1 are as follows:
- Carr - Carrageenan
- Konj - Konjac
- MC - Methylcellulose
- SPI - Soy Protein Isolate

### MATERIALS

The ingredients were as follows:
- SPI - Soy Protein Isolate
   o Solae supro EX 37 HG , Dupont / Solae Overseas B.V.
- Carrageenan
   ∘ Carrageenan Welco GelForm 1263, Barentz
- Konjac gum
   ∘ WELCO Konjac Gum 1001, Barentz
- Methylcellulose
   ∘ Methocel Bind 250 DowDupont (433026), Dupont / Solae Overseas B.V.
- Potato Starch
   ∘ Potato Starch N-Hance 59, Ingredion
- Oat Fibre
   ∘ Vitacel HF 200 Oat Fiber, JRS J. Rettenmaier & Söhne GMBH + CO KG
- Citrus Fibre
   ∘ Herbacel AQ Plus Citrus
- Psyllium Fibre
- Sunflower Oil, Thywissen
- SoRa Solid Fat
   o JFI SoRa 58 LT Juchem
- Pork Flavour, Firmenich
   o Pork steak powder blend
   ∘ Pork slow boiled flavour
- Yeast Extract std 18% NaCl
   ∘ Yeast extr. microgranul. stan. 18% salt , Biospringer
- Yeast Extract high nt
   ∘ Yeast extr. powder 12% nucl. 18% salt, Biospringer
- Vinegar
   ∘ Spirit Vinegar
- Progusta Kalium acetate
- Purac FCC80
- Citric Acid
- JJT Flavour
   ∘ SMOKEZ RA20005 (30736347) -JJT-124-C, Smoky light (Red Arrow)
- Transglutaminase
   ∘ TXO transglutaminase BDF

| **Ingredient (wt%)** | **Process Group** | **Role of ingredient.** | **A** | **B** | **C** | **D** | **E** | **F** | **1** | **2** | **3** |
|---|---|---|---|---|---|---|---|---|---|---|---|
| Water | 1.1 | Hydration of Protein | 25.67 | 26.67 | 25.2 | 26.65 | 30.35 | 30.35 | 30.35 | 34.35 | 34.15 |
| SPI | 1.1 | Protein | 4 | 4 | 4 | 4 | 4 | 4 | 4 | 4 | 4 |
| Crushed ice | 1.2 | Hydration of Gelling System | 39.25 | 39.55 | 35.95 | 35.9 | 31.9 | 31.9 | 31.9 | 31.9 | 31.9 |
| Carrageenan | 1.2 | Gelling System | 1.8 | 3 | 3 | 3 | 1.5 | 0 | 2.5 | 2.5 | 2 |
| Konjac | 1.2 | Gelling System | 1.8 | 0 | 0 | 0 | 1.5 | 3 | 0.5 | 0.5 | 1 |
| Methyl cellulose | 1.2 | Gelling System (optional) | 2 | 1.1 | 1.8 | 1.4 | 1.7 | 1.7 | 1.7 | 1.7 | 1.7 |
| Potato Starch | 1.2 | Binder System - Starch | 0 | 1 | 1 | 1.25 | 1.25 | 1.25 | 1.25 | 1.25 | 1.25 |
| Oat Fibre | 1.2 | Binder System - Fibre | 3 | 2.5 | 3.5 | 3.5 | 3.5 | 3.5 | 3.5 | 3.5 | 3.5 |
| Citrus Fibre | 1.2 | Binder System - Fibre | 0 | 0 | 1 | 0 | 0 | 0 | 0 | 0 | 0 |
| Psyllium Fibre | 1.2 | Binder System - Fibre | 0 | 0.5 | 0 | 0 | 0 | 0 | 0 | 0 | 0 |
| Sunflower Oil | 1.3 | Fat (liquid) | 10 | 8 | 8 | 17 | 17 | 17 | 17 | 17 | 17 |
| SoRa Solid Fat | 1.4 | Fat (solid) | 8 | 9 | 9 | 0 | 0 | 0 | 0 | 0 | 0 |
| Pork Steak Flavour | 1.4 | Flavour | 0.2 | 0 | 0 | 0 | 0 | 0 | 0 | 0 | 0 |
| Pork Slow Boiled Flavour | 1.4 | Flavour | 0 | 0.2 | 0.2 | 0.2 | 0.2 | 0.2 | 0.2 | 0.2 | 0.2 |
| Yeast Extract | 1.4 | Flavour | 0.5 | 0.5 | 0.5 | 0.5 | 0.5 | 0.5 | 0.5 | 0.5 | 0.5 |
| Yeast Extract high nt | 1.4 | Flavour | 0.35 | 0.35 | 0.35 | 0.35 | 0.35 | 0.35 | 0.35 | 0.35 | 0.35 |
| Salt | 1.4 | Flavour | 1.8 | 1.8 | 1.8 | 1.8 | 1.8 | 1.8 | 1.8 | 1.8 | 1.8 |
| Vinegar | 1.4 | Flavour | 0 | 0 | 0 | 0 | 0 | 0 | 0 | 0 | 0 |
| Progusta Kalium acetate | | Preservative | 0.8 | 0.8 | 0 | 0 | 0 | 0 | 0 | 0 | 0 |
| Purac FCC80 | 1.5 | Preservative | 0.5 | 0.7 | 0.35 | 0.35 | 0.35 | 0.35 | 0.35 | 0.35 | 0.55 |
| Citric Acid | | Preservative | 0.25 | 0.25 | 0.25 | 0 | 0 | 0 | 0 | 0 | 0 |
| JJT Flavour | 1.5 | Flavour | 0.08 | 0.08 | 0.1 | 0.1 | 0.1 | 0.1 | 0.1 | 0.1 | 0.1 |
| Water | | Hydration of Transglutaminase | 0 | 0 | 3 | 3 | 3 | 3 | 3 | 0 | 0 |
| Transglutaminase | | Adhesion enhancer | 0 | 0 | 1 | 1 | 1 | 1 | 1 | 0 | 0 |
| **Total** | | | **100** | **100** | **100** | **100** | **100** | **100** | **100** | **100** | **100** |
| | | | | | | | | | | | |
| *Carr Konjac weight ratio* | | | *1:1* | *n*/*a* | *n*/*a* | *n*/*a* | *1:1* | *n*/*a* | *5:1* | *5:1* | *2:1* |

| **WEIGHT RATIOS RELATIVE TO CARRAGEENAN** | | | | | | | | | | | |
|---|---|---|---|---|---|---|---|---|---|---|---|
| *Carr : MC Ratio* | | | *0.90:1* | *2.T3=1* | *1.67.1* | *2.14:1* | *0.88:1* | *n*/*a* | *1.47:1* | *1.47:1* | *1.18:1* |
| *Carr : Oat Fibre Ratio* | | | *0.601* | *1.20:1* | *0.86:1* | *0.86:1* | *0.43:1* | *n*/*a* | *0.71:1* | *0.71:1* | *0.57:1* |
| *Carr : Starch Ratio* | | | *n*/*a* | *3.00:1* | *3.00 1* | *2.40 1* | *1.20:1* | *n*/*a* | *2.00:1* | *2.00:1* | *1.60:1* |
| *Carr : Protein Ratio* | | | *0.45:1* | *0.75.1* | *0.75:1* | *0.75:1* | *0.38.1* | *n*/*a* | *0.63:1* | *0.63:1* | *0.50:1* |
| *Carr : Fat Ratio* | | | *0.18 1* | *0.38:1* | *0.38:1* | *0.18:1* | *0.09:1* | *n*/*a* | *0.15:1* | *0.15:1* | *0.12:1* |

| **WEIGHT RATIOS RELATIVE TO KONJAC** | | | | | | | | | | | |
|---|---|---|---|---|---|---|---|---|---|---|---|
| *Konj* : *MC Ratio* | | | *0.90:1* | *n*/*a* | *n*/*a* | *n*/*a* | *0.88:1* | 1.76:1 | *0.29:1* | *0.29:1* | *0.58:1* |
| *Konj : Oat Fibre Ratio* | | | *0.60:1* | *n*/*a* | *n*/*a* | *n*/*a* | *0.43:1* | *0.86:1* | *0.14:1* | *0-14:1* | *0.29:1* |
| *Konj : Starch Ratio* | | | *nla* | *n*/*a* | *n*/*a* | *n*/*a* | *1.20:1* | *2.40:1* | *0.40:1* | *0.40:1* | *0.80:1* |
| *Konᵢ.⁻ Protein Ratio* | | | *0.45:1* | *n*/*a* | *n*/*a* | *nla* | *0* | *0.75:1* | *0.13:1* | *0.13:1* | *0.25:1* |
| *Konj : Fat Ratio* | | | *0.18:1* | *n*/*a* | *n*/*a* | *n*/*a* | *0.09:1* | *0.18:1* | *0.03:1* | *0.0.3:1* | *0.06:1* |

| ***SUMS OF COMPONENTS*** | | | | | | | | | | | |
|---|---|---|---|---|---|---|---|---|---|---|---|
| *Carr+Konj* | | | *3.6* | *3* | *3* | *3* | *3* | *3* | *3* | *3* | *3* |
| *Other gel [MC] + binders [Potato, Oat, Citrus Fibre, Psyillium]* | | | *5* | *5.1* | *7.3* | *6.15* | *6.45* | *6.45* | *6.45* | *6.45* | *6.45* |
| *(Carr+Konj)* + *Other gel & binders* | | | *8.6* | *8.1* | *10.3* | *9.15* | *9.45* | *9.45* | *9.45* | *9.45* | *9.45* |
| *Fat* | | | *18* | *17* | *17* | *17* | *17* | *17* | *17* | *17* | *17* |

| **WEIGHT *RATIOS OF ADDITIVE COMPONENTS*** | | | | | | | | | | | |
|---|---|---|---|---|---|---|---|---|---|---|---|
| *(Carr+Konj) : Total Fat Ratio* | | | *0.20:1* | *0.18:1* | *0.18:1* | *0.18:1* | *0.18:1* | *0.18:1* | *0.18:1* | *0.18:1* | *0.18:1* |
| *((Carr+Konj) + Other gel & binders) : Total Fat Ratio* | | | *0.48:1* | *0.48:1* | *0.61:1* | *0.54:1* | *0.56:1* | *0.56:1* | *0.56:1* | *0.56:1* | *0.56:1* |
| *(Carr+Konj) : Protein Ratio* | | | *0.9:1* | *0.75:1* | *0.75:1* | *0.75:1* | *0.75:1* | *0.75:1* | *0.75:1* | *0.75:1* | *0.75:1* |
| *(Carr+Konj) : Fat Ratio* | | | *0.20 1* | *0.18:1* | *0.18:1* | *0.18:1* | *0.18:1* | *0.18:1* | *0.18:1* | *0.18:1* | *0.18:1* |

### PROCESSING

The formulations were processed as follows:
1: Soy protein isolate was mixed with chilled water (4°C) with a whisk and left to prehydrate for 10 minutes.
2: The pre-hydrated soy protein isolate was then placed into a vacuum bowl chopper together with the crushed ice and the ingredients indicated as Process Group 1.2 in Table 1. The ingredients were mixed at a vacuum of -0.8 bar for 3 minutes on speed 2.
3: The vacuum was released, and the mixture was scraped from the lid and paddles. The fat(s) (Process Group 1.3 in Table 1) were added into the mixture and mixed at -0.8 bar for 2 minutes on speed 2.
4: The vacuum was released, and the mixture was scraped from the lid and paddles. The final ingredients (Process Groups 1.4 & 1.5 in Table 1) were placed into the bowl and mixed at -0.8 bar for 2 minutes on speed 2.

### RESULTS

The characteristics and properties of the formulations were evaluated and were as follows.

Sample A had a Carrageenan : Konjac weight ratio of 1:1 which is less than 2:1. Sample A was found to be too firm, was therefore difficult to process, and hence did not provide an acceptable fat tissue mimetic.

Sample B did not contain Konjac but did have elevated (3 wt%) Carrageenan - almost twice the amount compared to Sample A. Despite also having higher solid fat (9 wt% c.f 8 wt% of Sample A) and lower liquid fat (8 wt% c.f 10 wt% of Sample A) and also having elevated additional gelling agents and binging agents (1.1 wt% MC, 1 wt% Potato Starch, 2.5 wt% Oat Fibre, 0.5 wt% Psyllium Fibre) Sample B did not provide an acceptable fat tissue mimetic because it was found to be too soft, almost liquid.

Sample C did not contain Konjac but did have elevated (3 wt%) Carrageenan - almost twice the amount compared to Sample A. Sample C also had elevated additional gelling agents and binging agents compared to Sample B (1.8 wt% MC, 1 wt% Potato Starch, 3.5 wt% Oat Fibre, 1 wt% Citrus Fibre). However, although the viscosity of Sample C was improved relative to Sample B, it did not provide an acceptable fat tissue mimetic because it did not have the required organoleptic perception of fattiness, despite containing a total of 17 wt% fat.

Samples A-C all contained a blend of solid and liquid fats.

Sample D utilised liquid fat (17 wt% SFO). Sample D did not contain Konjac but also had elevated (3 wt%) Carrageenan. The liquid oil was found to deliver an organoleptic perception of fattiness. However, Sample D did not provide an acceptable fat tissue mimetic because it was found to be too soft to process and did not provide the required haptic properties.

Sample E also utilised liquid fat (17 wt% SFO) and contained a 1 : 1 weight ratio of Carrageenan : Konjac (1.5 wt% : 1.5 wt%). However, Sample E did not provide an acceptable fat tissue mimetic because it was found to be too firm and too friable to process.

Sample F also utilised liquid fat (17 wt% SFO) but contained no Carrageenan and instead had an elevated level of Konjac (3 wt%). However, Sample F did not provide an acceptable fat tissue mimetic because it was found to be far too soft to process to such an extent that it was almost liquid.

It will be appreciated therefore that all examples falling outside the present invention did not provide acceptable fat tissue mimetics.

Sample 1 contained a 5 : 1 weight ratio of Carrageenan : Konjac (2.5 wt% : 0.5 wt%) and was found to provide a high quality fat mimetic with all the characteristics and properties required, including those of the raw fat and those required for combining the fat tissue mimetic of Sample 1 within meat analogues. Sample 1 was used to produce a meat analogue bacon product and the fat layers were found to adhere well with the proteinaceous components of the meat analogue.

Sample 2 also contained a 5 : 1 weight ratio of Carrageenan : Konjac (2.5 wt% : 0.5 wt%) and additionally contained transglutaminase (1 wt%) to assess whether the presence of transglutaminase enhanced adherence between the fat tissue mimetic and other components of meat analogues. Sample 2 was again found to provide a high quality fat mimetic with all the characteristics and properties required including those of the raw fat. Sample 2 was also used to produce a meat analogue bacon product and adherence of the fat layers with the proteinaceous components of the meat analogue were found to be comparable to that of Sample 1, indicating that fat tissues mimetics according to the invention have good adherence properties and do not require further additives such as transglutaminase.

Sample 3 contained a 2 : 1 weight ratio of Carrageenan : Konjac (2 wt% : 1 wt%) and did not contain any transglutaminase. Despite having a lower weight ratio of Carrageenan : Konjac, Sample 3 and was still found to provide a high quality fat mimetic with all the characteristics and properties required, including those of the raw fat and those required for combining the fat tissue mimetic of Sample 3 within meat analogues. Sample 3 was used to produce a meat analogue bacon product and the fat layers were found to adhere well with the proteinaceous components of the meat analogue.

## Claims

1. A fat tissue mimetic comprising
- 2-70wt% of fat;
- 1-20wt% of protein; and
- 0.5-10wt% of a gelling system comprising carrageenan and konjac,
**characterised in that** the weight ratio of carrageenan : konjac is greater than 1:1 and **in that** the melting point of the fat is from -30°C to 35°C.

2. A fat tissue mimetic according to claim 1 comprising from 4 to 60 wt% fat.

3. A fat tissue mimetic according to either claim 1 or claim 2 wherein the melting point of the fat is from -27.5°C to 15°C.

4. A fat tissue mimetic according to any of claims 1 to 3 wherein the fat is linseed oil, castor oil, sunflower oil, soybean oil, rapeseed oil, olive oil, or a mixture thereof.

5. A fat tissue mimetic according to any of claims 1 to 4 comprising from 1.25 to 17.5 wt% protein.

6. A fat tissue mimetic according to any of claims 1 to 5 wherein the protein is soy protein, cereal protein, rapeseed protein, cottonseed protein, sunflower protein, sesame protein, lupin protein, potato protein and algae protein. Preferred plant proteins are soy protein, wheat protein, oat protein, bran protein or a combination thereof.

7. A fat tissue mimetic according to any of claims 1 to 6 wherein the weight ratio of carrageenan : konjac is from 1.15:1 to 10:1.

8. A fat tissue mimetic according to any of claims 1 to 7 comprising from 1 to 9 wt% of the gelling system.

9. A fat tissue mimetic according to any of claims 1 to 8 wherein the weight ratio of the sum of carrageenan and konjac : protein is from 0.5:1 to 1.5:1.

10. A fat tissue mimetic according to any of claims 1 to 9 wherein the weight ratio of the sum of carrageenan and konjac : fat is from 0.05:1 to 0.5:1.

11. A process for the production of a fat mimetic according to any of claims 1 to 10 comprising the steps of:
(a) hydrating the protein;
(b) combining the hydrated protein with the components of the gelling system;
(c) combining the mixture from step (b) with the fat; and then
(d) combining the mixture from step (c) with the remaining ingredients.

12. A process according to claim 11 wherein steps (b), (c) and/or (d) are carried out under negative pressure.

13. A process according to claim 12 wherein steps (b), (c) and/or (d) are carried out at a pressure of less than -11 PSI.

14. A meat analogue comprising a fat tissue mimetic according to any of claims 1 to 10.

15. A meat analogue according to claim 14 that is a bacon meat analogue or a pepperoni meat analogue.

## Patentansprüche

1. Fettgewebemimetikum, umfassend
- 2 - 70 Gew.-% Fett;
- 1 - 20 Gew.-% Protein; und
- 0,5 - 10 Gew.-% eines Geliersystems, umfassend Carrageen und Konjak,
**dadurch gekennzeichnet, dass** das Gewichtsverhältnis von Carrageen zu Konjak größer als 1:1 ist und dass der Schmelzpunkt des Fetts zwischen -30°C bis 35°C liegt.

2. Fettgewebemimetikum nach Anspruch 1, umfassend 4 bis 60 Gew.-% Fett.

3. Fettgewebemimetikum nach entweder Anspruch 1 oder Anspruch 2, wobei der Schmelzpunkt des Fetts zwischen -27,5°C bis 15°C liegt.

4. Fettgewebemimetikum nach einem der Ansprüche 1 bis 3, wobei das Fett Leinöl, Rizinusöl, Sonnenblumenöl, Sojaöl, Rapsöl, Olivenöl oder eine Mischung davon ist.

5. Fettgewebemimetikum nach einem der Ansprüche 1 bis 4, das 1,25 bis 17,5 Gew.-% Protein umfasst.

6. Fettgewebemimetikum nach einem der Ansprüche 1 bis 5, wobei das Protein Sojaprotein, Getreideprotein, Rapsprotein, Baumwollsamenprotein, Sonnenblumenprotein, Sesamprotein, Lupinenprotein, Kartoffelprotein und Algenprotein ist, wobei bevorzugte Pflanzenproteine Sojaprotein, Weizenprotein, Haferprotein, Kleieprotein oder eine Kombination davon sind.

7. Fettgewebemimetikum nach einem der Ansprüche 1 bis 6, wobei das Gewichtsverhältnis von Carrageen : Konjak zwischen 1,15:1 bis 10:1 liegt.

8. Fettgewebemimetikum nach einem der Ansprüche 1 bis 7, umfassend 1 bis 9 Gew.-% Geliersystem.

9. Fettgewebemimetikum nach einem der Ansprüche 1 bis 8, wobei das Gewichtsverhältnis der Summe von Carrageen und Konjak : Protein zwischen 0,5:1 bis 1,5:1 liegt.

10. Fettgewebemimetikum nach einem der Ansprüche 1 bis 9, wobei das Gewichtsverhältnis der Summe von Carrageen und Konjak : Fett zwischen 0,05:1 bis 0,5:1 liegt.

11. Verfahren zur Herstellung eines Fettmimetikums nach einem der Ansprüche 1 bis 10, umfassend die Schritte:
(a) Hydratisieren des Proteins;
(b) Kombinieren des hydratisierten Proteins mit den Komponenten des Geliersystems;
(c) Kombinieren der Mischung aus Schritt (b) mit dem Fett; und dann
(d) Kombinieren der Mischung aus Schritt (c) mit den restlichen Zutaten.

12. Verfahren nach Anspruch 11, wobei die Schritte (b), (c) und/oder (d) unter Unterdruck durchgeführt werden.

13. Verfahren nach Anspruch 12, wobei die Schritte (b), (c) und/oder (d) unter einem Druck von weniger als -11 PSI durchgeführt werden.

14. Fleischanalogon, das ein Fettgewebemimetikum nach einem der Ansprüche 1 bis 10 umfasst.

15. Fleischanalogon nach Anspruch 14, das ein Speckfleischanalogon oder ein Pepperonifleischanalogon ist.

## Revendications

1. Succédané de tissu adipeux comprenant
- 2 à 70 % en poids de matière grasse ;
- 1 à 20 % en poids de protéine ; et
- 0,5-10 % en poids d'un système gélifiant comprenant du carraghénane et du konjac, **caractérisé en ce que** le rapport en poids entre le carraghénane et le konjac est supérieur à 1:1, et **en ce que** le point de fusion de la matière grasse est compris entre -30 °C et 35 °C.

2. Succédané de tissu adipeux selon la revendication 1, comprenant de 4 à 60 % en poids de matière grasse.

3. Succédané de tissu adipeux selon la revendication 1 ou 2, dans lequel le point de fusion de la matière grasse est compris entre -27,5 °C et 15 °C.

4. Succédané de tissu adipeux selon l'une quelconque des revendications 1 à 3, dans lequel la matière grasse est de l'huile de lin, de l'huile de ricin, de l'huile de tournesol, de l'huile de soja, de l'huile de colza, de l'huile d'olive ou un mélange de ces huiles.

5. Succédané de tissu adipeux selon l'une quelconque des revendications 1 à 4, comprenant de 1,25 à 17,5 % en poids de protéine.

6. Succédané de tissu adipeux selon l'une quelconque des revendications 1 à 5, dans lequel la protéine est une protéine de soja, une protéine de céréale, une protéine de colza, une protéine de graine de coton, une protéine de tournesol, une protéine de sésame, une protéine de lupin, une protéine de pomme de terre et une protéine d'algue ; et les protéines végétales préférées sont la protéine de soja, la protéine de blé, la protéine d'avoine, la protéine de son ou une combinaison de ces protéines.

7. Succédané de tissu adipeux selon l'une quelconque des revendications 1 à 6, dans lequel le rapport en poids entre le carraghénane et le konjac est compris entre 1,15:1 et 10:1.

8. Succédané de tissu adipeux selon l'une quelconque des revendications 1 à 7, comprenant de 1 à 9 % en poids du système gélifiant.

9. Succédané de tissu adipeux selon l'une quelconque des revendications 1 à 8, dans lequel le rapport en poids entre la somme du carraghénane et du konjac et la protéine est compris entre 0,5:1 et 1,5:1.

10. Succédané de tissu adipeux selon l'une quelconque des revendications 1 à 9, dans lequel le rapport en poids entre la somme du carraghénane et du konjac et la matière grasse est compris entre 0,05:1 et 0,5:1.

11. Procédé de production d'un succédané de matière grasse selon l'une quelconque des revendications 1 à 10, comprenant les étapes comprenant le fait de :
(a) hydrater la protéine ;
(b) combiner la protéine hydratée avec les composants du système gélifiant ;
(c) combiner le mélange de l'étape b) avec la matière grasse ; et ensuite
(d) combiner le mélange de l'étape c) avec les ingrédients restants.

12. Procédé selon la revendication 11, dans lequel les étapes (b), (c) et/ou (d) sont effectuées sous pression négative.

13. Procédé selon la revendication 12, dans lequel les étapes (b), (c) et/ou (d) sont effectuées à une pression inférieure à -11 PSI.

14. Analogue de viande comprenant un succédané de tissu adipeux selon l'une quelconque des revendications 1 à 10.

15. Analogue de viande selon la revendication 14 qui est un analogue de viande de bacon ou un analogue de viande de pepperoni.
